# EUROPÄISCHE PATENTSCHRIFT

(11) **EP 1 842 394 B1**
(45) Veröffentlichungstag und Bekanntmachung des Hinweises auf die Patenterteilung: **07.04.2010**
(21) Anmeldenummer: 05707970.9
(22) Anmeldetag: 08.02.2005
(51) Int. Cl.: H05B 3/28, F24D 13/02

(54) **HEIZEINRICHTUNG FÜR WAND-, DECKEN- ODER FUSSBODENBELÄGE**
HEATING DEVICE FOR WALL, CEILING OR FLOOR COVERINGS
DISPOSITIF CHAUFFANT POUR REVETEMENTS MURAUX, REVETEMENTS DE PLAFOND ET DE SOL

(30) Priorität: 19.01.2005 DE 202005000886 U
(43) Veröffentlichungstag der Anmeldung: 10.10.2007
(73) Patentinhaber: Kronoplus Technical AG, 9052 Niederteufen (CH)
(72) Erfinder: DÖHRING, Dieter, 01561 Lampertswalde (DE); ZORN, Heinz, A-8063 Eggersdorf (AT); KREMER, Gerhard, A-8280 Fürstenfeld (AT); MACHER, David, A-8570 Voitsberg (AT)
(74) Vertreter: Heselberger, Johannes
(86) Internationale Anmeldenummer: PCT/EP2005/050548
(87) Internationale Veröffentlichungsnummer: WO 2006/076967

(56) Entgegenhaltungen:
- EP-A- 0 357 945
- EP-A- 0 486 891
- EP-A- 0 486 892
- WO-A-99/62301
- DE-A1- 4 112 565
- DE-A1- 19 850 676
- DE-U1- 29 900 958
- US-B1- 6 188 839

## Beschreibung

Die Erfindung betrifft eine Heizeinrichtung und zwar insbesondere ein Element einer Fußbodenheizung, Bekannte Fußbodenheizungen umfassen Heizmittel, die unterhalb eines Fußbodenbelages, so zum Beispiel unterhalb von Steinplatten, Fliesen, Parkettelementen oder Laminatpaneelen angeordnet sind. Die Heizmittel können aus elektrisch beheizbaren Folien bestehen.

Beim vorgenannten Stand der Technik muss die erzeugte Wärme erst die Steinplatten, Fliesen, Parkettelemente oder Laminatponeele durchdringen, bevor in angestrebter Weise ein Raum beheizt wird. Einerseits reagiert eine solche Heizung dadurch relativ träge. Andererseits wird relativ viel Wärme an den Fußboden unerwünscht abgegeben.

Aufgabe der Erfindung ist die Schaffung eines Heizelements, mit der gute Heizergebnisse erzielt werden können.

Zur Lösung der Aufgabe umfasst ein Fußbodenelement ein Heizmittel und ist mit diesem verbunden.

Um im Vergleich zum Stand der Technik gezielter und schneller die erzeugte Wärme dem zu beheizenden Raum zuzuführen, werden die Heizmittel im Unterschied zum Stand der Technik in einer Ausführungsform nicht unterhalb eines Belages, also unterhalb einer Steinplatte, Fliese, eines Parkettelements oder Laminatpaneels angeordnet, sondern Im Inneren des Belages, also in der Steinplatte, Fliese, im Parkettelement oder im Laminatpaneel und zwar bevorzugt im oberen Drittel von der Fußbodenoberfläche aus gesehen.

Ein Laminatpaneel umfasst eine Dekorschicht, die sich auf einer tragenden Schicht befindet. Die tragende Schicht besteht in der Regel aus einer Platte, die In der Regel aus einem Holzwerkstoff gefertigt ist. Eine solche Platte besteht derzeit bevorzugt aus MDF, HDF oder Kompaktlaminat, um so eine stabile leimlose Verbindung zwischen Paneelen zu ermöglichen.

Besonders schnell und gezielt kann Wärme dem zu beheizenden Raum zugeführt werden, wenn das Heizmittel in einer vorteilhaften Ausführungsform der Erfindung sich zwischen der tragenden Schicht und dem Dekorpapier befindet. Die vom Heizmittel ausgehende Wärme gelangt dann besonders schnell in den zu beheizenden Raum. Es werden gute Wirkungsgrade erzielt.

Das Heizmittel besteht bevorzugt aus Drähten oder Schnüren, die geeignet elektrisch schwach leitend sind. Dünne Schnüre oder Drähte lassen sich innerhalb einer Steinplatte, einer Fliese, eines Parkettelements oder Laminatpaneels anordnen. Es treten dann im Vergleich zu einer Heizeinrichtung in Form einer Folie vergleichsweise geringe mechanische Probleme aufgrund von unterschiedlichen Ausdehnungen und Schrumpfungen innerhalb des Belags für Fußböden, Wände oder Decken auf.

Die elektrisch schwach leitenden Drähte oder Schnüre weisen vorteilhaft sehr geringe Durchmesser von beispielsweise 0,5 bis 0,01 mm auf. Einerseits können derartige Schnüre oder Drähte mechanisch hinreichend stabil gefertigt werden. Andererseits sind solche Drähte oder Schnüre dünn genug, um hinreichend problemlos innerhalb einer Steinplatte. Fliese, eines Parkettelements oder eines Laminatpaneels angeordnet werden zu können.

Aus produktionstechnischen Gründen wird bevorzugt ein Gelege oder ein Geflecht in eine Steinplatte, Fliese, ein Parkettelement oder Laminatpaneel eingearbeitet, welches die schwach leitenden Drähte oder Schnüre umfasst. Ein solches Gelege bzw. Geflecht ist vor allem im Fall eines schichtförmigen Aufbaus des aus einer Steinplatte, Fliese, eines Parkettelements oder Laminatpaneels bestehenden Belags zu bevorzugen. Das beispielsweise in Form eines Geleges vorliegende Heizmittel kann in vergleichbarer Weise wie die anderen Schichten verarbeitet werden, was die Produktion vereinfacht und zwar insbesondere im Fall von Laminatpaneelen.

Das Gelege oder Geflecht wird im Fall eines Laminatpaneels gemeinsam mit den übrigen Schichten wie tragende Platte, harzgetränktes Gegenzugpapier, harzgetränktes Dekorpapier, harzgetränktes Overlay sowie gegebenenfalls harzgetränkte Kraftpapiere verpresst. Ein zusätzlicher Arbeitsschritt für das Verbinden einer Heizeinrichtung mit dem Paneel ist also nicht erforderlich.

Vor allem bei der Herstellung von Laminatpaneelen ist die Ausführungsform, bei der das Heizelement in Form eines Geleges oder Geflechts vorliegt, besonders vorteilhaft. Bei Laminatpaneelen werden nämlich verschiedene Lagen oberhalb einer Trägerplatte mit Hilfe von Harz angebracht. Das bei der Herstellung von Laminatpaneelen verwendete Harz kann das Gelege bzw, das Geflecht durchdringen. Dies gewährleistet eine mechanisch stabile Oberfläche. Das Geflecht vermag außerdem die Stoßfestigkeit der Oberfläche bei einem Laminatpaneel zu verbessern und zwar insbesondere dann, wenn das Geflecht zugfeste Schnüre wie Glasfasern umfasst. Die verbesserte Stoßfestigkeit ist vor allem dann von Vorteil, wenn die Paneele einen Fußbodenbelag bilden.

Um die gewünschte Heizleistung bereitstellen zu können, ist der elektrische Widerstand einer für das Heizen vorgesehenen Schnur oder eines für das Heizen vorgesehenen Drahtes geeignet klein einzustellen. Als Basismetalle für Legierungen von Widerstandsdrähten eignen sich insbesondere Cu, Ni und Fe und zwar bevorzugt mit nachfolgend genannter Zusammensetzung bzw, Massenanteilen:
- Ni-Cr (65 - 80 % Ni + 1,5 % Si; z.B. 80-20)
- Ni-Cr-Fe (35 - 60 % Ni + SI, Nb; z.B. 60-15-24)
- Ni-Cr-Co-Mo-Ti
- Cu-Ni mit einem Anteil von 2 - 45% Ni
- Ni-Cr-Al mit einem Anteil von 35 - 95 % Ni
- Ni-Cr-Si mit einem Anteil von 70 - 80 % Ni
- Fe-Cr-Al (-Mo).

Die vorgenannten Legierungen weisen geeignete elektrische Widerstände auf, der insbesondere bei einer Temperatur von 20°C zwischen 50 und 1 50 µOhm/cm³ liegt.

Ni-Cr- sowie Ni-Cr-Al Legierungen werden besonders bevorzugt. Diese sind im Vergleich zu Legierungen mit großen Eisenanteilen vorteilhaft nicht magnetisch, was bei Belägen regelmäßig erwünscht ist. Im Vergleich zu Cu-Ni-Legierungen haben die Ni-Cr-Legierungen vorteilhaft eine geringere Dichte und thermische Ausdehnung. Insbesondere die geringere thermische Ausdehnung ist von Vorteil, da dadurch die Stabilität des Endprodukts verbessert gewährleistet ist. Von Vorteil ist ferner, dass die Zugfestigkeit und der elektrische Widerstand größer im Vergleich zu den Cu-Ni-Legierungen ist, was ebenfalls beim Endprodukt von Vorteil ist.

Um den elektrischen Widerstand, aber auch um die thermische Leitfähigkeit bei der bevorzugt eingesetzten Ni-Cr-Legierung heraufzusetzen, wird vorteilhaft ein Chromanteil von wenigstens 10, bevorzugt von wenigstens 15 Gew.-% in der Legierung vorgesehen.

Bekannte Legierungen, die den Anforderungen grundsätzlich genügen, sind in der Regel relativ spröde. Die Herstellung eines Drahtes aus einer spröden Legierung ist problematisch. Als besonders gut geeignet hat sich eine NiCr2OAlSi - Legierung bevorzugt mit folgenden Massenanteilen in % herausgestellt: 3,5 Al, 20 Cr, Fe 0,5, Ni Rest. Die Legierung kann noch Si und zwar zum Beispiel ein Prozent Si enthalten. Die Legierung weist eine geeignete elektrische Leitfähigkeit auf und ist andererseits dennoch mechanisch geeignet, um durch Ziehen einen Draht mit einem Durchmesser von weniger als 0,05 mm herstellen zu können. Der Anteil an Cr kann dabei variieren. Er liegt beispielsweise bei 15 bis 25 Massenanteilen in der Legierung.

Die bevorzugt eingesetzte NiCr - Legierung enthält geringe Anteile an Si von wenigen Gew.-% beispielsweise von weniger als 3 Gew.-% und mehr als 0,5 Gew.-% und zwar insbesondere um die Zugfestigkeit der Legierung zu erhöhen.

Die Zugabe von Aluminium verbessert vorteilhaft unter anderem die Korrosionseigenschaften und führt zu einer Mischkristallhörtung. Daher enthält die NiCr - Legierung bevorzugt einige Massenanteile an Aluminium und zwar bevorzugt von 1 bis 5%.

Um die Kosten für die Herstellung zu senken, besteht das Gelege oder Geflecht einerseits aus den Drähten oder Schnüren, mit denen elektrisch die gewünschte Wärme erzeugt werden kann - nachfolgend Heizdrähte bzw. Heizschnüre genannt - , und andererseits aus vergleichsweise preiswerten Schnüren, mit denen die Heizdrähte bzw. Heizschnüre verflochten sind. Die vergleichsweise preiswerten Schnüre bestehen beispielsweise aus einem elektrisch nicht leitenden Kunststoff, glasfaserverstärkten Kunststoffen oder aus Glasfasern.

Bevorzugt verlaufen die Heizdrähte bzw. Heizschnüre innerhalb eines Geleges oder Geflechts im Wesentlichen parallel zueinender in einer Richtung und die vergleichsweise preiswerten Schnüre im Wesentlichen senkrecht dazu. Eine solche Anordnung ist geeignet, damit das Geflecht ohne Verzug weiter verarbeitet werden kann.

Um ein als Heizeinrichtung dienendes Geflecht oder Gelege wie eine Materialbahn, also zum Beispiel wie ein Dekor- oder Gegenzugpapier gut verarbeiten zu können, sind die Materialien des Geflechts so zu wählen, dass die Schnüre oder Drähte sich nicht verziehen. Um dies zu erreichen, bestehen die vergleichsweise preiswerten Schnüre bevorzugt aus glasfaserverstärkten Kunststoffen oder Glasfasern oder einem vergleichbar zugfesten Kunststoff.

Um einen Verzug des Geflechts bzw. Geleges bei der Verarbeitung weiter herabzusetzen, entspricht der Durchmesser der vergleichsweise preiswerten Schnüre vorteilhaft dem Durchmesser der Heizdrähte oder Heizschnüren.

Wird ein Laminatpaneel hergestellt, so sind die oberen Schichten mit Harz durchdrungen, welches für den Verbund der Schichten sorgt. Vom Ausdehnungsverhalten her sind dann Glasfasern besonders gut geeignet, um in die Oberfläche eines solchen Paneels integriert zu werden. Darüber hinaus ist dann die Oberfläche des Paneels besonders stoßfest. Solche Paneele eignen sich daher besonders gut als Belag für einen Fußboden.

Um die Kosten für die Herstellung weiter zu senken und ferner den gewünschten elektrischen Widerstand besonders genau einstellen zu können, werden als Heizdrähte bzw. Heizschnüre metallisch beschichtete Schnüre eingesetzt. Die metallisch noch nicht beschichteten Schnüre bestehen dann beispielsweise aus Kunststoff, aus glasfaserverstärkten Kunststoffen oder Glasfasern. Aus vorgenannten Gründen sind bei Laminatpaneelen Glasfasern besonders zu bevorzugen, die metallisch beschichtet werden.

Die metallische Beschichtung erfolgt in einer besonders preiswerten Ausführungsform durch Bedampfen. Zwar ist dann die Haftung zwischen der metallischen Beschichtung und der Schnur nicht sehr gut. Dies ist aber regelmäßig unkritisch, da die Schnur im späteren Produkt eingebettet ist und dann die Beschichtung regelmäßig nur gering belastet wird. Andernfalls wird ein Schnur durch Sputtern metallisch beschichtet. Metallionen werden dann durch ein elektrisches Feld in Richtung Schnur beschleunigt, so dass diese dann mit großer Geschwindigkeit auf die Schnur auftreffen. Der Verbund zwischen der Schnur und Ihrer metallischen Beschichtung ist dann deutlich stabiler im Vergleich zum Fall der Bedampfung. Ein solcher Heizdraht bzw. Heizschnur kann dann mechanisch stärker belastet werden.

In einer besonders vorteilhaften Ausführungsform weist ein als Heizelement dienendes Geflecht elektrisch vergleichsweise gut leitende Bereiche auf, die senkrecht zu den Heizdrähten bzw. Heizschnüren verlaufen und mit diesen elektrisch verbunden sind. Diese elektrisch vergleichsweise gut leitenden Bereiche dienen der Stromversorgung für die Heizdrähte bzw. Heizschnüre. Der elektrische Widerstand der vergleichsweise gut leitenden Bereiche ist also geringer im Vergleich zum elektrischen Widerstand der Heizdrähte bzw. Heizschnüre. Bevorzugt werden die elektrisch vergleichsweise gut leitenden Bereiche durch metallisches Beschichten bereitgestellt.

In einer vorteilhaften Ausführungsform der Erfindung befinden sich die Heizelemente im Inneren von Paneelen oder Platten, die zu einem Belag für einen Fußboden, Wand oder Decke zusammengesetzt werden sollen. Die Heizelemente von verschiedenen Paneelen oder Platten werden miteinander verbunden, in dem elektrische Leiter von den Heizelementen aus nach unten aus den Paneelen bzw. Platten herausgeführt und miteinander geeignet elektrisch verbunden werden. Solche Elemente eines Belages können einfach verlegt werden, ohne dass die elektrische Kontaktierung auf der sichtbaren Oberfläche des Wand-, Decken odor Fußbodenbelages sichtbar wird.

Die elektrische Verbindung zwischen den verschiedenen Belagelementen erfolgt vorteilhaft über Steckverbindungen, um einfach verlegen zu können. Besonders vorteilhaft gibt es dann zwei verschiedene Arten von Steckverbindungen, die einerseits für das Verbinden mit dem +Pol und andererseits für das Verbinden mit dem -Pol ausgelegt sind. Die verschiedenen Steckverbindungen sind nicht kompatibel zueinander, sc dass auf diese Weise ein versehentliches Vertauschen der elektrischen Pole unterbunden wird. Auch ein ungeübter Heimwerker kann dann einen solchen Belag problemlos verlegen.

Die Steckverbindung umfasst bevorzugt metallische Hülsen bzw. Buchsen, die aus einer Platte oder aus einem Paneel von der Heizeinrichtung nach unten herausführen. Von der Rückseite her kann dann der zugehörige Stecker in die entsprechende Buchse gesteckt werden. Für den einen elektrischen Pol weist dann die Buchse beispielsweise einen runden Durchmesser und für den anderen Pol beispielsweise einen eckigen Durchmesser auf. Die Stecker sind entsprechend rund oder eckig geformt. So kann auf einfache Weise die +Pol-Verbindung von der -Pol-Verbindung unterschelden werden.

Im Fall von Paneelen oder Platten mit einer rechteckigen Oberfläche erfolgt die Stromversorgung von einer Platte bzw. einem Paneel zum nächsten parallel zu den langen Seiten von der Oberfläche her gesehen. Die elektrisch besser bzw. gut leitenden Bereiche innerhalb des Paneels bzw. innerhalb der Platte verlaufen dann parallel zu den langen Seiten. Diese grenzen dann an die beiden langen Seiten an. Mit diesen beiden elektrisch gut leitenden Bereichen sind die Heizdrähte bzw. Heizschnüre elektrisch verbunden und verlaufen senkrecht dazu, also parallel zu den schmalen Seiten einer Platte bzw. eines Paneels mit rechteckiger Oberfläche. Elektrischer Strom wird dann dem einen elektrisch gut leitenden Bereich zugeführt und von dem anderen wieder abgeführt. Aus verlegetechnischen Gründen ist diese Anordnung im Fall von Platten oder Paneelen mit rechteckiger Oberfläche besonders zu bevorzugen.

Die elektrische Verbindung von einer Platte bzw. von einem Paneel mit rechteckiger Oberfläche zur nächsten erfolgt ebenfalls aus verlegetechnischen Gründen bevorzugt parallel zu den langen Seiten. Der entsprechende elektrische Leiter, der unterhalb eines aus den Platten bzw. Paneelen gebildeten Belages angeordnet ist, verläuft dann also parallel zu den langen Seiten der Paneele bzw. Platten.

Die Buchsen bzw. Hülsen, die der vorgenannten elektrischen Kontaktierung dienen, sind im Fall von Platten oder Paneelen mit rechteckiger Oberfläche bevorzugt angrenzend an die langen Seiten angeordnet. Entlang einer langen Seite gibt es vorteilhaft eine Mehrzahl solcher Buchsen bzw. Hülsen, die gleichmäßig verteilt angeordnet sind. Auf der einen langen Seite befinden sich dann die Buchsen bzw. Hülsen für den +Pol und auf der anderen Seite die Buchsen oder Hülsen für den -Pol. Diese Anordnung gewährleistet, dass die elektrische Verbindung zwischen den Paneelen bzw. Platten flexibel gehandhabt werden kann.

Die Stromversorgung für einen solchen Belag erfolgt dann vom Rand des Belages aus und zwar in einer vorteilhaften Ausführungsform von dem Rand, der durch die schmalen Selten von Platten oder Paneelen mit rechteckiger Oberfläche gebildet wird.

Für das elektrische Verbinden von zwei Platten oder Paneelen wird vorzugsweise ein elektrisch leitendes Flachband eingesetzt, welches geeignet mit Steckern versehen sein kann. Ein solches Flachband läst sich problemlos unterhalb eines Belages unterbringen.

Die elektrische Heizeinrichtung grenzt bevorzugt an wenigstens ein Kraftpapier, also an ein mechanisch stabiles Papier mit einem Gewicht von typischerweise 100 bis 200 g/m². Thermisch bedingte Spannungen können durch das Kraftpapier abgebaut werden, was die Stabilität des Aufbaus verbessert. So befindet sich beispielsweise im Fall eines Laminatpaneels ein solches Kraftpapier zwecks Abbau von thermischen Spannungen bevorzugt zwischen der tragenden Platte und der Heizeinrichtung, welches beispielsweise als Gelege oder Geflecht vorliegt. Weiter verbessert werden solche thermischen Spannungen abgebaut, wenn sich die Heizeinrichtung zwischen zwei Kraftpapieren befindet.

Wird die Heizeinrichtung mittels Harz eingebunden, so wird bevorzugt zwecks Abbau von thermischen Spannungen ein Harz gewählt, welches im ausgehärteten Zustand eine geringe Netzwerkdichte ausbildet. Phenolharz ist ein Harz mit geringer Netzwerkdichte im Sinne der vorliegenden Erfindung. Ein Aminoharz weist dagegen eine hohe Netzwerkdichte im Sinne der Erfindung auf. Ein modifiziertes Aminoharz oder ein Mischharz kann wiederum eine geringe Netzwerkdichte im Sinne der Erfindung zeigen.

Vor allem im Fall eines Laminatpaneels wird die Heizeinrichtung mit einem Harz fixiert, welches eine geringe Netzwerkdichte ausbildet. Darüber befindliche Schichten wie Dekorpapier sowie Overlay sind dagegen mit einem Harz wie zum Beispiel einem Aminoharz durchdrungen, welches eine verhältnismäßig große Netzwerkdichte ausbildet. So wird einerseits der Abbau von thermischen Spannungen gefördert und andererseits eine gute Abriebfestigkeit, Stoßfestigkeit sowie Chemikalienbeständigkeit an der Oberfläche erreicht.

Besteht die Heizeinrichtung aus einem Gewebe, Gelege oder Geflecht aus Glasfasern, so wird dieses besonders vorteilhaft mit einem Epoxydharz fixiert. Ein Epoxydharz bildet eine geringe Netzwerkdichte im Sinne der Erfindung aus. Insbesondere in diesem Fall gelingt der Abbau von thermischen Spannung hinreichend gut, so dass zusätzliche Kraftpapiere für einen weiteren Abbau von thermischen Spannungen nicht erforderlich sind.

Im folgenden wird die Erfindung anhand von Ausführungsbeispielen näher erläutert.

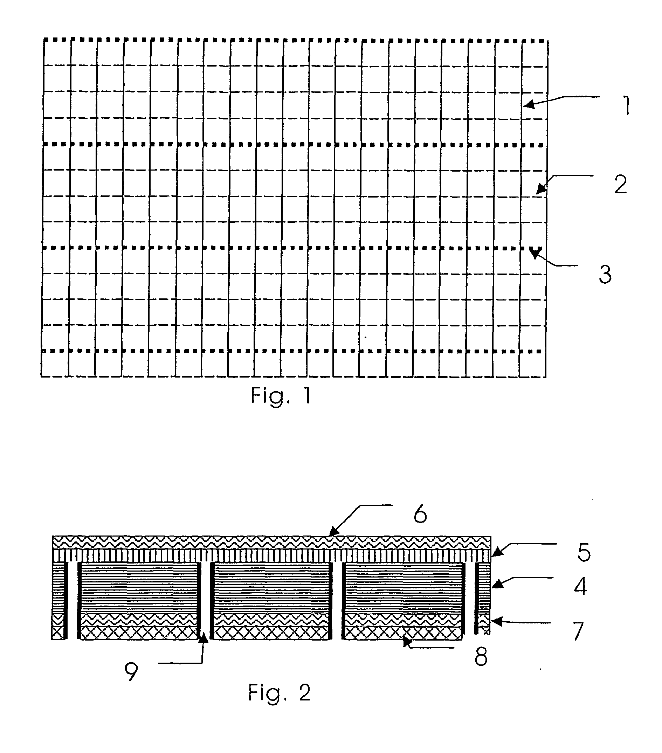

Figur 1 zeigt eine Heizeinrichtung mit Heizschnüren 1, die parallel zueinander innerhalb eines Gewebes, Geleges oder Geflechts angeordnet sind. Senkrecht zu den Heizschnüren 1 verlaufen elektrisch nicht leitende Schnüre 2, mit denen die Heizschnüre 1 verflochten sind. Es liegt dadurch einen flächenartiges Gebilde vor, welches gut verarbeitet und in ein Paneel eingebunden werden kann. Beispielsweise durch metallisches Beschichten sind hochleitende Bereiche 3 erzeugt worden, die parallel zu den elektrisch nicht leitenden Schnüren 2 verlaufen und die elektrisch mit den Heizschnüren 1 verbunden sind. Zwischen den elektrisch gut leitenden Bereichen 3 befinden sich stets eine Mehrzahl an elektrisch nicht leitenden Schnüren 2.

Um eine solche Heizeinrichtung bei der Herstellung von Laminatpaneelen einsetzen zu können, liegt der Abstand zwischen zwei elektrisch gut leitenden Bereichen 3 typischerweise zwischen 1 und 40 cm. Diese Abstände eignen sich für Paneele mit rechteckiger Oberfläche, bei denen die schmale Seite 15 bis 50 cm lang ist.

Figur 2 zeigt im Schnitt einen typischen Aufbau eines Laminatpaneels. Eine Platte 4 verleiht dem Paneel mechanische Stabilität. Oberhalb der Platte gibt es ein Schichtsystem 5, welches eine Heizeinrichtung umfasst. Die Heizeinrichtung ist bevorzugt wie in Figur 1 gezeigt beschaffen. Es kann sich jedoch auch um eine Folie handeln. Das Schichtsystem 5 kann Kraftpapiere umfassen, die sich oberhalb und/ oder unterhalb der Heizeinrichtung befinden. Das Schichtsystem 5 umfasst bevorzugt ein Harz mit niedrig ausgebildeter Netzwerkdichte, also zum Beispiel ein Phenolharz oder ein Epoxydharz.

Oberhalb des Schichtsystems 5 befindet sich ein Schichtsystem 6, welches ein Harz umfasst, das eine hohe Netzwerkdichte aufweist. Typischerweise handelt es sich hierbei um ein Aminoharz. Das Schichtsystem 6 umfasst regelmäßig zunächst ein Dekorpapier mit darauf befindlichen abriebfesten Partikeln wie Korund. Das Korund wird wiederum nach oben hin in der Regel abgedeckt und zwar beispielsweise durch ein transparentes Overlay.

Unterhalb der Platte 4 befindet sich regelmäßig ein Schichtsystem 7 mit einem Gegenzugpapier, welches mit Harz, so zum Beispiel aus Kostengründen mit einem Harnstoffharz an der Platte 4 angebracht ist. Unterhalb des Schichtsystems 7 kann eine trittschalldämmende Schicht 8 an gebracht sein.

Von unten führen elektrisch leitfähige Hülsen 9 zur Heizeinrichtung und zwar bevorzugt zu elektrisch gut leitenden Bereichen 3 gemäß Figur 1. Die Hülsen 9 sind in der Regel entlang sowie benachbart einer langen Seite eines Paneels mit rechteckiger Oberfläche angeordnet. Parallel dazu verlaufen dann elektrisch leitfähige Bereiche 3 oberhalb von Hülsen 9. Die so unterhalb eines elektrisch gut leitfähigen Bereichs 3 angeordneten Hülsen 9 weisen dann grundsätzlich die gleiche Form und den gleichen Durchmesser auf. Hülsen, die zu einem benachbart angeordneten elektrisch gut leitfähigen Bereich 3 führen, weisen dann bevorzugt eine andere Form und/ oder einen anderen Durchmesser auf, um so Fehler bei den elektrischen Installationsarbeiten zu vermeiden.

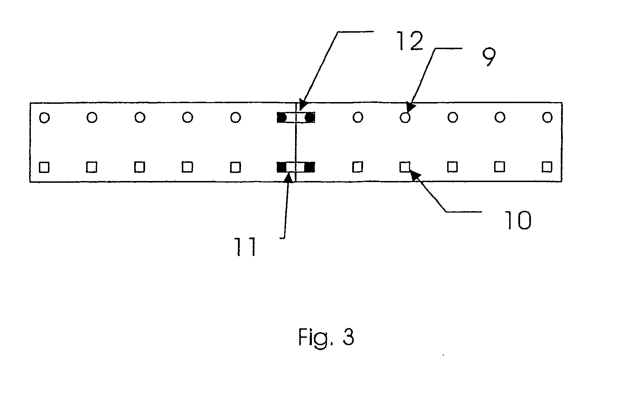

Figur 3 zeigt zwei über nicht gezeigte Nuten und Federn miteinander verbundene Paneele mit rechteckiger Unterseite. Die Unterseite weist entlang der langen Seiten zum einen Hülsen 9 mit runden Querschnitt und zum anderen Hülsen 10 mit rechteckigem Querschnitt auf. Die Hülsen 9 sind elektrisch mit einem leitfähigen Bereich 3 verbunden und die Hülsen 10 sind elektrisch mit einem anderen leitfähigen Bereich 3 verbunden. Ein Flachband 11 mit vorstehenden Steckern mit rechteckigem Querschnitt verbindet zwei Hülsen 10 miteinander, die zu unterschiedlichen Paneelen gehören. Ein Flachband 12 mit an einer Seite vorstehenden Steckern mit rundem Querschnitt verbindet entsprechend zwei Hülsen 9 elektrisch miteinander.

## Patentansprüche

1. Element für einen Wand-, Decken- oder Bodenbelag, insbesondere eine Steinplatte, Fließe, Parkett- oder Laminatpaneel, mit einem damit verbundenen Heizmittel, **dadurch gekennzeichnet, dass** das Heizmittel metallisch beschichtete Schnüre (1) umfasst.

2. Element nach Anspruch 1, bei dem das Heizmittel im oberen Drittel des Elements von der Oberfläche her gesehen, angeordnet ist.

3. Element nach einem der vorhergehenden Ansprüche, bei dem das Element ein Laminat- oder Parkettpaneel ist, welches an der Oberseite ein Dekorpapier oder eine aus Holz bestehende Schicht umfasst, an die ein Heizmittel angrenzt.

4. Paneel nach dem vorhergehenden Anspruch, bei dem das Heizmittel zwischen einer tragenden Platte (4) und einer Dekorschicht (6) angeordnet ist.

5. Element nach einem der vorhergehenden Ansprüche, bei dem das Heizmittel in Form eines Gewebes, Geflechts oder Geleges vorliegt.

6. Element nach dem vorhergehenden Anspruch, bei dem das Geflecht durch parallel verlaufende metallisch beschichtete Schnüre (1) sowie durch senkrecht dazu verlaufende elektrisch nicht leitende Schnüre (2) gebildet wird.

7. Element nach einem der vorhergehenden Ansprüche, bei dem die metallisch beschichteten Schnüre Glasfasern (1, 2, 3) umfassen.

8. Element nach einem der vorhergehenden Ansprüche, bei dem das Heizmittel mit Hülsen (9, 10) verbunden ist, die nach unten aus dem Element herausführen.

9. Element nach dem vorhergehenden Anspruch, bei dem es zwei unterschiedliche Hülsen (9, 10) gibt, die sich vom Durchmesser und/oder von der Form voneinander unterscheiden und die mit verschiedenen leitfähigen Bereichen (3) des Heizmittels innerhalb des Elements elektrisch verbunden sind.

10. Element nach einem der vorhergehenden Ansprüche mit rechteckiger Oberfläche, welches sowohl elektrisch als auch mechanisch mit einem zweiten Element an den schmalen Seiten verbunden ist und zwar bevorzugt durch Flachleiter (11, 12) mit an einer Seite vorstehenden Steckern.

11. Element nach Anspruch 3, mit mehreren Schichtsystemen (5, 6) oberhalb einer Trägerplatte, wobei das oberste Schichtsystem (6) mit einem Harz durchdrungen ist, welches eine große Netzwerkdichte aufweist im Vergleich zu dem Harz, welches das darunter befindliche Schichtsystem mit dem Heizmittel durchdringt.

12. Element nach einem der vorhergehenden Ansprüche, welches Teil eines Bodenbelags ist.

13. Element nach einem der vorhergehenden Ansprüche, bei dem das Heizmittel eine NICR-Legierung aufweist, die bevorzugt Anteil an A1 und/oder Si enthält.

## Claims

1. Element for a wall, ceiling or floor covering, in particular a stone plate, tile, parquet or laminate panel, having a heating means connected therewith, **characterized in that** the heating means comprises metallically coated cords (1).

2. Element according to claim 1, wherein the heating means is arranged in the upper third of the element, as seen from the surface.

3. Element according to any one of the preceding claims, wherein the element is a laminate or parquet panel, which comprises on the top side a décor paper or a layer consisting of wood, adjacent to a heating means.

4. Panel according to the preceding claim, wherein the heating means is arranged between a carrying board (4) and a décor layer (6).

5. Element according to any one of the preceding claims, wherein the heating means is provided in the form of a network, meshwork or web.

6. Element according to the preceding claim, wherein the meshwork is formed from metallically coated cords (1) which run parallel to each other and from electrically non-conductive cords (2) which run perpendicular thereto.

7. Element according to any one of the preceding claims, wherein the metallically coated cords comprise glass fibers (1, 2, 3).

8. Element according to any one of the preceding claims, wherein the heating means is connected with bushes (9, 10) which lead out of the underside of the element.

9. Element according to the preceding claim, wherein two different bushes (9, 10) are provided, which differ from each other by means of the diameter and/or the shape and which are electrically connected with different conductive sections (3) of the heating means inside of the element.

10. Element according to any one of the preceding claims having a rectangular surface which is connected electrically as well as mechanically with a second element at the small sides and preferably by means of flat strip conductors (11, 12) having protruding contacts on one side.

11. Element according to claim 3, having multiple layer systems (5, 6) above a carrying board, wherein the topmost layer system (6) is impregnated with a resin, which is provided with a large network density compared to the resin, with which the underlying layer system with the heating means is impregnated.

12. Element according to any one of the preceding claims, wherein the element is part of a floor covering.

13. Element according to any one of the preceding claims, wherein the heating means comprises a NiCr alloy which preferably contains amounts of Al and/or Si.

## Revendications

1. Élément pour un revêtement de mur, de plafond ou de sol, en particulier une dalle de pierre, un carreau, un panneau de parquet ou de laminé, avec un moyen de chauffage qui y est relié, **caractérisé en ce que** le moyen de chauffage comprend des fils à enduction métallique (1).

2. Élément selon la revendication 1, dans lequel le moyen de chauffage est disposé dans le tiers de l'élément situé en haut par rapport à la surface de celui-ci.

3. Élément selon une des revendications précédentes, dans lequel l'élément est un panneau de laminé ou de parquet qui comporte, sur le dessus, un papier décoratif ou une couche constituée de bois à laquelle un moyen de chauffage est contigu.

4. Panneau selon la revendication précédente, dans lequel le moyen de chauffage est disposé entre une plaque de support (4) et une couche décorative (6).

5. Élément selon une des revendications précédentes, dans lequel le moyen de chauffage se présente sous la forme d'un tissu, d'un treillis ou d'une nappe.

6. Élément selon la revendication précédente, dans lequel le treillis est formé par des fils à enduction métallique s'étendant parallèlement (1) et par des fils électriquement non conducteurs (2) disposés perpendiculairement à ceux-ci.

7. Élément selon une des revendications précédentes, dans lequel les fils à enduction métallique comprennent des fibres de verre (1, 2, 3).

8. Élément selon une des revendications précédentes, dans lequel le moyen de chauffage est relié à des douilles (9, 10) qui sortent de l'élément vers le bas.

9. Élément selon une des revendications précédentes, dans lequel il existe deux douilles différentes (9, 10) qui se différencient l'une de l'autre par le diamètre et/ou par la forme et qui sont reliées électriquement à diverses zones conductrices (3) du moyen de chauffage à l'intérieur de l'élément.

10. Élément selon une des revendications précédentes à surface rectangulaire, lequel est relié aussi bien électriquement que mécaniquement à un deuxième élément par les petits côtés, à savoir de préférence par l'intermédiaire de conducteurs plats (11, 12) pourvus de fiches dépassant d'un côté.

11. Élément selon la revendication 3, avec plusieurs systèmes de couches (5, 6) au-dessus d'une plaque de support, le système de couches supérieur (6) étant imprégné d'une résine qui présente une densité réticulaire élevée par rapport à la résine qui imprègne le système de couches sous-jacent comprenant le moyen de chauffage.

12. Élément selon une des revendications précédentes, lequel fait partie d'un revêtement de sol.

13. Élément selon une des revendications précédentes, dans lequel le moyen de chauffage comprend un alliage de Ni-Cr qui, de préférence, contient une proportion de A1 et/ou de Si.
